# EUROPÄISCHE PATENTSCHRIFT

(11) **EP 3 720 727 B1**
(45) Veröffentlichungstag und Bekanntmachung des Hinweises auf die Patenterteilung: **24.11.2021**
(21) Anmeldenummer: 18795964.8
(22) Anmeldetag: 23.10.2018
(51) Int. Cl.: B60J 7/02, B60J 7/043, E05D 15/10

(54) **VORRICHTUNG FÜR EIN FAHRZEUGDACH UND VERFAHREN ZUM BETREIBEN EINER VORRICHTUNG FÜR EIN FAHRZEUGDACH**
DEVICE FOR A VEHICLE ROOF, AND METHOD FOR OPERATING A DEVICE FOR A VEHICLE ROOF
DISPOSITIF POUR UN TOIT DE VÉHICULE ET PROCÉDÉ POUR FAIRE FONCTIONNER UN TEL DISPOSITIF POUR UN TOIT DE VÉHICULE

(30) Priorität: 06.12.2017 DE 102017129040
(43) Veröffentlichungstag der Anmeldung: 14.10.2020
(73) Patentinhaber: Webasto SE, 82131 Stockdorf (DE)
(72) Erfinder: TEUFEL, Ingo, 82131 Stockdorf (DE); PLUCIENNIK, Björn, 82131 Stockdorf (DE)
(74) Vertreter: Epping - Hermann - Fischer
(86) Internationale Anmeldenummer: PCT/EP2018/078992
(87) Internationale Veröffentlichungsnummer: WO 2019/110191

(56) Entgegenhaltungen:
- DE-A1- 10 158 174
- DE-C1- 3 735 686

## Beschreibung

Die Erfindung betrifft eine Vorrichtung für ein Fahrzeugdach, insbesondere für eine Ausstellmechanik eines Deckels für eine Dachöffnung in dem Fahrzeugdach.

Die Erfindung betrifft weiterhin ein Verfahren zum Betreiben einer Vorrichtung für ein Fahrzeugdach.

Kraftfahrzeuge können eine Dachöffnung aufweisen, die mittels eines beweglichen Deckels verschließbar und zumindest teilweise freigebbar ist. Hierfür ist eine Deckelmechanik vorgesehen, die auch Ausstellmechanik genannt werden kann. Eine solche Mechanik für ein Spoilerdach ist beispielsweise in die DE 37 35 686 C1, DE 101 58 174 A1 und DE 10 2017 106 510 beschrieben.

Es ist wünschenswert, eine Vorrichtung für ein Fahrzeugdach anzugeben, die einen verlässlichen Betrieb ermöglicht. Es ist zudem wünschenswert, ein Verfahren zum Betreiben einer Vorrichtung für ein Fahrzeugdach anzugeben, das einen verlässlichen Betrieb ermöglicht.

Gemäß zumindest einer Ausführungsform weist eine Vorrichtung für ein Fahrzeugdach ein Führungselement mit einer Gleitbahn auf. Das Führungselement ist beispielsweise Teil einer Führungsschiene, die an dem Fahrzeugdach montierbar ist. Die Vorrichtung weist einen Bolzen auf. Der Bolzen ist relativ zu dem Führungselement verschiebbar und dabei auf der Gleitbahn geführt. Der Bolzen und das Führungselement weisen eine gemeinsame Kontaktfläche auf, die durch einen Vorsprung an dem Bolzen ausgebildet ist. Der Vorsprung ist ausgebildet, beim Verschieben entlang der Gleitbahn eine korrespondierende Einkerbung in die Gleitbahn einzubringen.

Der Bolzen, der beispielsweise einen zylinderförmigen Grundkörper aufweist, weist den Vorsprung auf. Dieser springt beispielsweise über den zylinderförmigen Grundkörper vor. Der Vorsprung springt beispielsweise 1 mm, 2 mm oder 0,5 mm über den Grundkörper vor. Bei einer Benutzung der Vorrichtung ist der Bolzen relativ zu dem Führungselement verschiebbar. Das Führungselement, insbesondere die Gleitbahn, und der Bolzen sind relativ zueinander so angeordnet, dass der Bolzen mit dem Vorsprung entlang der Gleitbahn verschiebbar ist und dabei mit der Gleitbahn in Berührung ist. Die Vorrichtung ist so ausgebildet, dass insbesondere bei einer erstmaligen Verwendung der Vorrichtung oder einer bestimmten Anzahl an Verwendungen nach der erstmaligen Verwendung, beispielsweise bei den ersten zehn Verwendungen, die Einkerbung mittels des Vorsprungs in die Gleitbahn einbringbar ist. Die Gleitbahn ist insbesondere zunächst im Wesentlichen glatt und ohne die Einkerbung ausgebildet. Erst durch die Verwendung der Vorrichtung wird die Einkerbung in die Gleitbahn eingebracht. Nach dem Ausbilden der Einkerbung im weiteren Betrieb der Vorrichtung ist der Bolzen mit dem Vorsprung in der Einkerbung geführt.

Aufgrund der Ausformung der Einkerbung mittels des Vorsprungs an dem Bolzen ist eine spielfreie Führung des Bolzens an dem Führungselement möglich. Toleranzen der relativen Lage des Bolzens zu dem Führungselement werden so kompensiert. Der Vorsprung und die Gleitbahn, die so ausgebildet ist, dass die Einkerbung ausbildbar ist, wirken toleranzausgleichend. Der Bolzen mit dem Vorsprung ist einfach herstellbar, beispielsweise als Drehteil oder als Frästeil.

Die spielfreistellende Wirkung des Bolzens mit dem Vorsprung im Zusammenwirken mit dem Führungselement mit der Gleitbahn ist vergleichsweise einfach möglich. Der Vorsprung ermöglicht ein Einformen der Einkerbung und somit ein Berücksichtigen möglichst vieler Toleranzen der Vorrichtung als Eingangsgrößen. Lediglich der Vorsprung und nicht der Bolzen insgesamt formt die Einkerbung beispielsweise aus. Somit ist eine Leichtgängigkeit beim Verschieben des Bolzens relativ zum Führungselement realisierbar. Die Vorrichtung ermöglicht somit ein möglichst spielfreies Anordnen des Bolzens und des Führungselements relativ zueinander und dabei eine Leichtgängigkeit beim Verschieben des Bolzens und des Führungselements relativ zueinander. Somit ist eine Geräuschemission beispielsweise durch Klappern vermeidbar und dabei auch eine Schwergängigkeit vermeidbar. Eine gewünschte Passung des Bolzens und des Führungselements zueinander stellt sich bei der ersten Verwendung oder den anfänglichen Verwendungen der Vorrichtung selbstständig ein. Somit ist eine einfache Toleranzauslegung realisierbar.

Gemäß zumindest einer Ausführungsform ist der Vorsprung als ringförmig umlaufende Rippe ausgebildet. Der Vorsprung weist an dem zylinderförmigen Bolzen die Form eines Rings an der Mantelfläche des Bolzens auf. Auch andere Formen sind möglich, beispielsweise ein nicht vollständiger Ring. Beispielsweise ist der Vorsprung nur an dem Teil des Bolzens ausgebildet, der im Betrieb in Kontakt mit der Gleitbahn gerät. Gemäß weitere Ausführungsformen ist eine Mehrzahl von Vorsprüngen an dem Bolzen ausgebildet. Beispielsweise sind mehrere vorspringende Rippen ausgebildet. Die Anzahl der Vorsprünge, die Form der Vorsprünge und die Höhe der Vorsprünge wird insbesondere so ausgewählt, dass eine gewünschte möglichst spielfreie Passung des Bolzens und des Führungselements realisiert wird und dabei das Verschieben gewünscht leichtgängig bleibt. Beispielsweise ist die Rippe im Querschnitt dreiecksförmig, zylinderstumpfförmig oder in der Form eines Segments eines Ovals ausgebildet.

Gemäß zumindest einer Ausführungsform ist der Vorsprung aus einem härteren Material ausgebildet als die Gleitbahn. Beispielsweise ist der Vorsprung aus einem Metall ausgebildet, beispielsweise Stahl und/oder Aluminium. Beispielsweise ist die Gleitbahn aus einem Kunststoff ausgebildet, der weicher ist als das Metall des Vorsprungs. Das Führungselement umfasst insbesondere den Kunststoff an der Stelle, an der die Gleitbahn ausgebildet ist. Der Kunststoff ist beispielsweise ein Polymer. Somit ist verlässlich realisierbar, dass der Vorsprung die Einkerbung in der Gleitbahn ausbilden kann.

Gemäß zumindest einer Ausführungsform ist der Bolzen Teil eines Ausstellhebels. Der Ausstellhebel ist beispielsweise Teil einer Deckelmechanik für einen Deckel für das Fahrzeugdach. Eine Bewegung des Ausstellhebels entgegen einer ersten Richtung relativ zu dem Führungselement ist mittels des Bolzens und der Gleitbahn blockierbar. Beispielsweise ist in einem ersten Zustand zum Ausklappen des Ausstellhebels der Bolzen entlang der Gleitbahn verschiebbar. Die Gleitbahn ist so geformt, dass im ausgestellten Zustand des Ausstellhebels eine Verschiebung entgegen der ersten Richtung relativ zum Führungselement aufgrund des Anschlags des Bolzens an der Gleitbahn blockiert ist. Beispielsweise weist die Gleitbahn hierzu abschnittsweise eine im Wesentlichen vertikale Ausrichtung auf.

Gemäß zumindest einer Ausführungsform weist der Vorsprung in einem Ausgangszustand ein Übermaß zur Gleitbahn. In dem Ausgangszustand ist die Einkerbung noch nicht in die Gleitbahn eingebracht.

Gemäß zumindest einer Ausführungsform ist in einem betriebsfertigen Zustand die Einkerbung ausgebildet, insbesondere durch eine erstmalige oder mehrfache Verwendung der Vorrichtung. Die gemeinsame Kontaktfläche ist durch den Vorsprung und der Einkerbung an der Gleitbahn ausgebildet. Der Grundkörper des Bolzens und die Gleitbahn sind beispielsweise im Betrieb beabstandet voneinander. Der Vorsprung ist in der Gleitbahn geführt und der Bolzen somit mittels des Vorsprungs in Kontakt mit der Gleitbahn.

Unmittelbar nach der Herstellung des Führungselements ist die Einkerbung nicht ausgebildet. Im Betrieb ist die Einkerbung ausgebildet.

Gemäß zumindest einer Ausführungsform weist das Fahrzeugdach eine Dachöffnung auf. Die Dachöffnung ist mittels eines Deckels verschließbar. Der Deckel ist mittels der Deckelmechanik an dem Fahrzeugdach befestigt und insbesondere relativ zum übrigen Fahrzeugdach verschiebbar. Die Deckelmechanik weist eine Vorrichtung gemäß zumindest einer Ausführungsform auf.

Gemäß zumindest einer Ausführungsform wird ein Verfahren zum Betreiben einer Vorrichtung für ein Fahrzeugdach angegeben, insbesondere ein Verfahren zum Betreiben der Vorrichtung gemäß zumindest einer Ausführungsform wie beschrieben. Das Verfahren umfasst ein Bereitstellen eines Führungselements mit einer Gleitbahn und ein Bereitstellen eines Bolzens mit einem Vorsprung. Der Bolzen wird entlang der Gleitbahn verschoben. Beim Verschieben ist der Vorsprung in Kontakt mit der Gleitbahn. Dadurch wird eine Einkerbung in der Gleitbahn ausgebildet, die mit dem Vorsprung korrespondiert.

Die zu der Vorrichtung erläuterten Merkmale und Vorteile gelten insbesondere auch für das Verfahren und umgekehrt. Mittels des Verfahrens ist es möglich, die Einkerbung in der Gleitbahn erst während des erstmaligen Betriebs oder einer bestimmten Anzahl an Verwendungen nach dem erstmaligen Betrieb auszubilden. Somit wird eine möglichst spielfreie Passung des Bolzens und des Führungselements miteinander ermöglicht. Die Gleitbahn ist zunächst glatt und insbesondere ohne die Einkerbung ausgebildet. Beim Verschieben des Bolzens entlang der Gleitbahn formt der Vorsprung die Einkerbung in die Gleitbahn. Insbesondere sind der Bolzen und das Führungselement mit einem Übermaß zueinander angeordnet, so dass der Vorsprung in die Gleitbahn eingedrückt wird. Das Ausbilden der Einkerbung erst bei der Durchführung des Verfahrens wirkt toleranzausgleichend für Toleranzen des Bolzens und des Führungselements sowie der Anordnung des Bolzens und des Führungselements zueinander.

Gemäß zumindest einer Ausführungsform umfasst das Verfahren ein Verschieben eines Ausstellhebels entlang einer ersten Richtung relativ zu dem Führungselement beim Verschieben des Bolzens. Der Ausstellhebel ist beispielsweise Teil einer Deckelmechanik. Der Bolzen ist beispielsweise an dem der Ausstellhebel befestigt und der Ausstellhebel von dem Führungselement gehalten. Der Bolzen wird relativ zu der Gleitbahn in eine Blockierposition bewegt. In der Blockierposition blockiert der Bolzen zusammen mit der Gleitbahn eine Bewegung des Ausstellhebels entgegen der ersten Richtung relativ zu dem Führungselement.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können darin mit den gleichen Bezugszeichen versehen sein.

Es zeigen:
Figur 1 eine schematische Darstellung eines Fahrzeugs gemäß einem Ausführungsbeispiel,
Figur 2 eine schematische Darstellung eines Teils einer Deckelmechanik gemäß einem Ausführungsbeispiel,
Figur 3 eine schematische Darstellung eines Teils einer Deckelmechanik gemäß einem Ausführungsbeispiels,
Figur 4 eine schematische Darstellung eines Teils einer Deckelmechanik gemäß einem Ausführungsbeispiel,
Figur 5 eine schematische Darstellung einer Schnittansicht einer Vorrichtung gemäß einem Ausführungsbeispiel, und
Figur 6 eine schematische Darstellung einer Vorrichtung gemäß einem Ausführungsbeispiel.

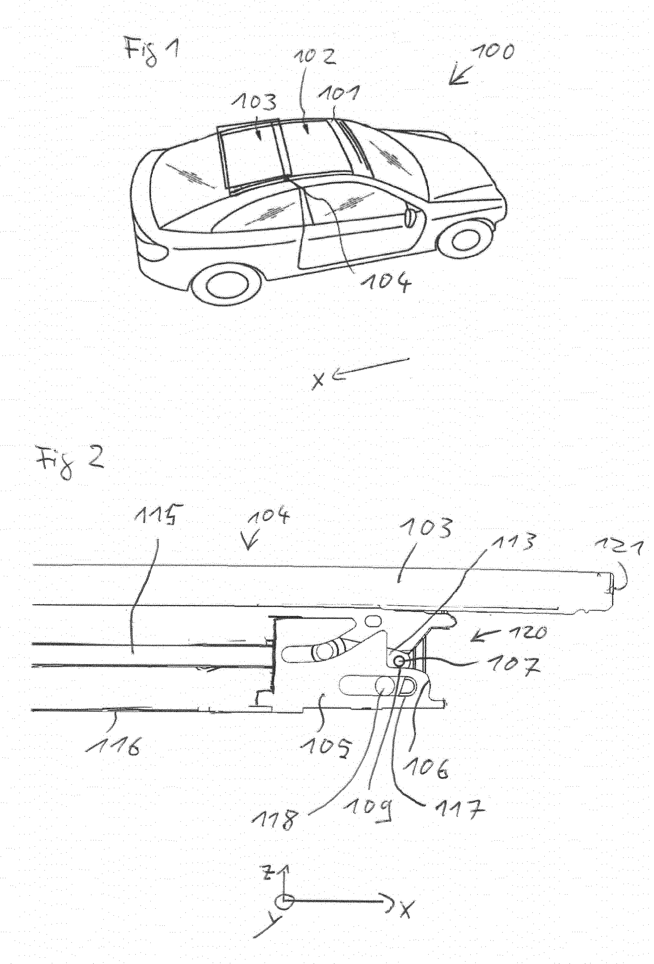

Figur 1 zeigt eine schematische Darstellung eines Fahrzeugs 100. Das Fahrzeug weist ein Fahrzeugdach 101 auf. In dem Fahrzeugdach 101 ist eine Dachöffnung 102 ausgebildet. Die Dachöffnung 102 ist mittels eines verschiebbaren Deckels 103 wahlweise verschließbar oder zumindest teilweise freigebbar. Beispielsweise ist der Deckel 103 Teil eines sogenannten Spoilerdachs. Ein Spoilerdach ist beispielsweise in der DE 102014109698 beschrieben.

Entlang einer X-Richtung, die entlang einer ersten Richtung, beispielsweise der Fahrzeuglängsrichtung verläuft, sind beidseitig der Dachöffnung 102 Führungsschienen 116 (Figur 2) angeordnet. Der Deckel 103 ist mittels einer Deckelmechanik 104 und den Führungsschienen 116 am Fahrzeugdach 102 gehalten. Die Deckelmechanik 104 und die Führungsschiene 116 steuern und führen zudem die Relativbewegung des Deckels 103 zum übrigen Fahrzeugdach 101. Nachfolgend wird eine anmeldungsgemäße Vorrichtung 120 anhand einer Seite der Dachöffnung 126 erläutert. Die gegenüberliegende Seite ist korrespondierend dazu aufgebaut.

Figur 2 zeigt eine entlang der X-Richtung am hinteren Ende angeordnete Hinterkante 121 des Deckels 103 mit der dazugehörigen Vorrichtung 120. Die Vorrichtung 120 ist Teil der Deckelmechanik 104.

Die Deckelmechanik 104 weist beispielsweise eine Ausstellstange 115 auf, die mit einem Antrieb der Deckelmechanik 104 gekoppelt ist. Die Ausstellstange 115 überträgt eine Bewegung des Antriebs auf einen Ausstellhebel 113. Der Ausstellhebel 113 ist vorgesehen, um die Hinterkante 121 des Deckels 103 entlang der Z-Richtung zu bewegen.

Die Führungsschiene 116 weist an ihrem in X-Richtung hinteren Ende ein Führungselement 105 auf. Das Führungselement 105 ist insbesondere aus einem Kunststoff gebildet. Das Führungselement 105 weist insbesondere Kunststoff auf, der beispielsweise verstärkt ist, beispielsweise durch Metall.

Der Ausstellhebel 113 ist mit dem Führungselement 105 gekoppelt und insbesondere von dem Führungselement 105 gehalten. Der Ausstellhebel 113 weist einen Bolzen 107 und einen weiteren Bolzen 118 auf, die sich im betriebsfertigen Zustand jeweils hauptsächlich entlang der Y-Richtung erstrecken. Der weitere Bolzen 118 des Ausstellhebels 113 ist in einer Kulisse 117 des Führungselements 105 angeordnet und geführt. Somit ist eine Bewegung des Ausstellhebels 113 relativ zum Führungselement 105 entlang der X-Richtung möglich. Zum Bewegen der Hinterkante 121 des Deckels 103 wird der Ausstellhebel 113 sowohl translatorisch entlang der X-Richtung bewegt als auch rotatorisch um eine Drehachse, die von dem weiteren Bolzen 118 vorgegeben ist.

Der Bolzen 107 ist dabei an einer Gleitbahn 106 des Führungselements 105 angeordnet und geführt. Eine derartige Deckelmechanik ist beispielsweise in der eingangs genannten DE 102017106510 erläutert.

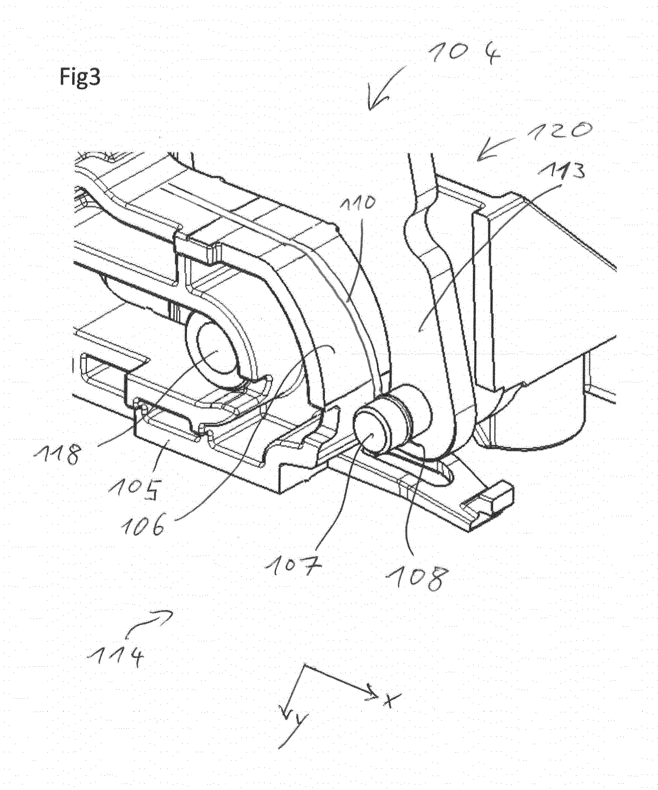

Figur 3 zeigt einen Teil der Deckelmechanik 104 in ausgestellter Position des Ausstellhebels 113. Der Ausstellhebel 113 ist verschwenkt, um die Hinterkante 121 des Deckels 103 in Z-Richtung anzuheben im Vergleich zu der geschlossenen Position des Deckels 103.

Der Bolzen 107 ist im Vergleich zur Position, die in Figur 2 dargestellt ist, entlang der Gleitbahn 106 verschoben. In Figur 3 befindet sich der Bolzen 107 relativ zur Gleitbahn 106 in seiner Blockierposition 114. Die Gleitbahn 106 ist so geformt, dass in der ausgestellten Position des Ausstellhebels 113 eine Bewegung des Ausstellhebels 113 entgegen der X-Richtung durch den Kontakt des Bolzens 107 mit der Gleitbahn 106 blockiert wird. Eine Verschiebung des Ausstellhebels 113 relativ zum Führungselement 105 entlang der X-Richtung wird in der ausgestellten Position des Ausstellhebels 113 durch den weiteren Bolzen 118 in Zusammenwirken mit der Kulisse 117 und durch den Bolzen 107 in Zusammenwirken mit der Gleitbahn 106 blockiert.

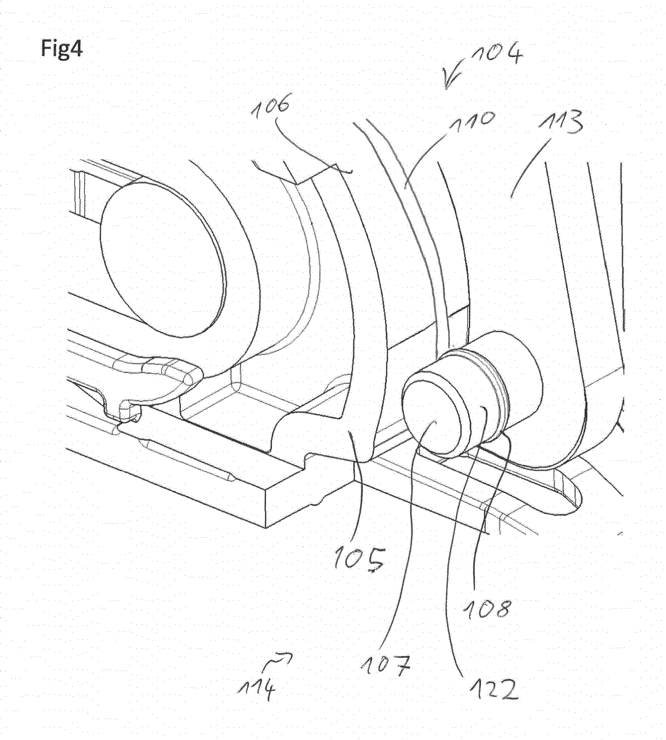

Der Bolzen 107 weist einen Vorsprung 108 auf. Der Bolzen 107 weist eine Mantelfläche 122 (Figur 4) auf, die beispielsweise im Wesentlichen konzentrisch zur Y-Richtung ist. Der Vorsprung 108 ist beispielsweise ringförmig an der Mantelfläche 122 des Bolzens 107 angeordnet und ebenfalls konzentrisch zur Y-Richtung.

Die Gleitbahn 106 weist eine Einkerbung 110 auf. Die Einkerbung 100 korrespondiert mit dem Vorsprung 108 des Bolzens 107. Beim Bewegen des Bolzens 107 entlang der Gleitbahn 106 ist der Vorsprung 108 in der Einkerbung 110 geführt.

Figur 4 zeigt die Vorrichtung 120 der Figur 3 im Detail. Die Mantelfläche 122 des Bolzens 107 ist im Abstand zur Gleitbahn 106 angeordnet. Lediglich der Vorsprung 108 ist in der Einkerbung 110 in Kontakt mit der Gleitbahn 106. Somit wird eine Leichtgängigkeit der Bewegung des Bolzens 107 relativ zum Führungselement 105 ermöglicht.

Die Einkerbung 110 ist mittels einer Bewegung des Bolzens 107 relativ zur Gleitbahn 106 in die Gleitbahn 106 eingebracht. Der Vorsprung 108 verformt das Material des Führungselements 105 an der Gleitbahn 106, so dass sich die Einkerbung 110 ausbildet. Beispielsweise deformiert der Vorsprung 108 die Gleitbahn 106, um die Einkerbung 110 auszubilden.

Das Führungselement 105 wird mit der Gleitbahn 106 zunächst ohne die Einkerbung 110 hergestellt. Die Vorrichtung 120 wird montiert, wie beispielsweise in Figur 2 dargestellt. Insbesondere sind das Führungselement 105 und der Bolzen 107 so ausgelegt und relativ zueinander angeordnet, dass der Vorsprung 108 und die Gleitbahn 106 ein Übermaß zueinander aufweisen. Der Vorsprung 108 wird in die Gleitbahn 106 eingedrückt. Beim Verschwenken des Ausstellhebels 113 und somit beim Entlanggleiten des Bolzens 107 entlang der Gleitbahn 106 wird aufgrund des Einpressens des Vorsprungs 108 in die Gleitbahn 106 die Einkerbung 110 ausgebildet. Der Bolzen 107 formt sich mittels des Vorsprungs 108 seine Führungsbahn in Form der Einkerbung 110 spielfrei in die Gleitbahn 106 ein. Toleranzen in der Vorrichtung 120 werden somit kompensiert.

Insbesondere werden Toleranzen kompensiert, die in der Blockierposition 114 dazu führen könnten, dass ein Abstand zwischen der Gleitbahn 106 und dem Bolzen 107 auftritt. Dies kann zu Klappern und damit zu einer Geräuschemission führen. Dies wird durch den Vorsprung 108 ausgeglichen, der sich seine korrespondierende Einkerbung 110 selbst formt und somit spielfrei ist. Eine definierte Überdeckung des Vorsprungs 108 zur Gleitbahn 106 ermöglicht sowohl eine Leichtgängigkeit bei der Relativbewegung des Bolzens 107 entlang der Gleitbahn 106 als auch ein toleranzausgleichendes Ausbilden der Einkerbung 110. Die Einkerbung 110 kann auch als Nut bezeichnet werden.

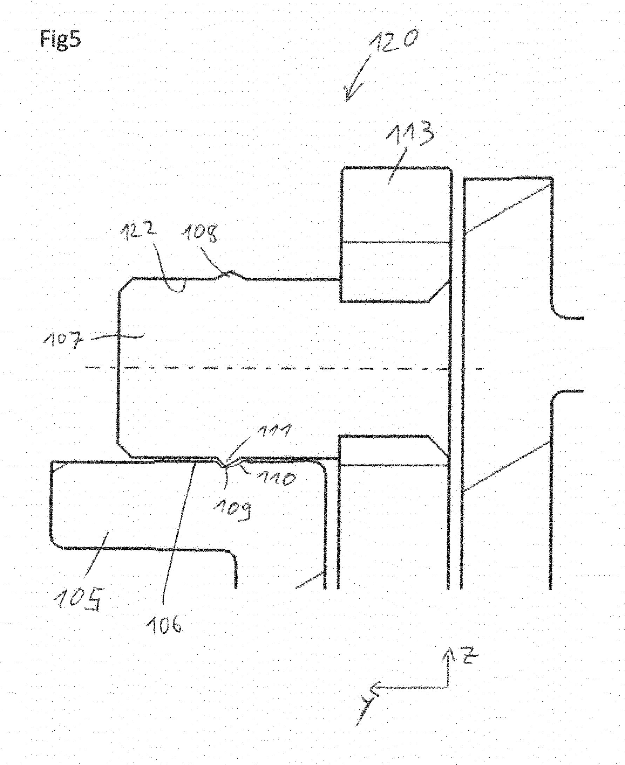

Figur 5 zeigt die Vorrichtung 120 in einer Schnittansicht. Die Mantelfläche 122 des Bolzens 107 ist von der Gleitbahn 106 beabstandet. Der Vorsprung 108 ist beispielsweise als umlaufende Rippe 111 an der Mantelfläche 122 ausgebildet. Der Vorsprung 108 springt in der gezeigten Ansicht entlang der Z-Richtung über die Mantelfläche 122 vor. Der Vorsprung 108 springt quer zur Haupterstreckungsrichtung über die Mantelfläche 122 vor. Die Haupterstreckungsrichtung ist beispielsweise die Y-Richtung. Die Rippe 111 kann unterschiedliche Formen aufweisen, je nach gewünschter Leichtgängigkeit und/oder andere Rahmenbedingungen. Beispielsweise ist die Rippe 111 als Ringzacke ausgebildet. Es ist auch eine andere Form möglich, beispielsweise eine Kreissegmentform, eine mehreckige Form und/oder eine Kombination aus verschiedenen Formen. Der Vorsprung 108, beispielsweise die Rippe 111, ist in der Einkerbung 110 in Kontakt mit der Gleitbahn 106. Der Vorsprung 108 und die Gleitbahn 106 weisen in der Einkerbung 110 eine gemeinsame Kontaktfläche 109 auf. Da die Einkerbung 110 durch den Vorsprung 108 ausgebildet ist, ist die Einkerbung 110 im Querschnitt korrespondierend und passend zum Vorsprung 108 ausgebildet.

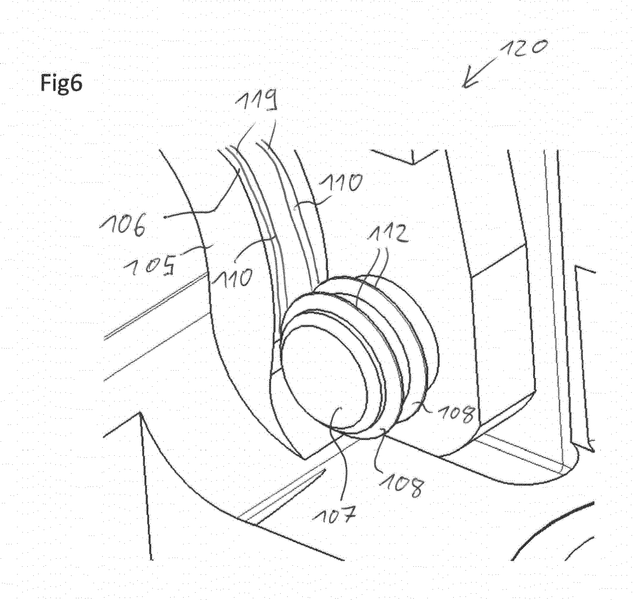

Figur 6 zeigt die Vorrichtung 120 gemäß einem weiteren Ausführungsbeispiel. Die Vorrichtung 120 entspricht im Wesentlichen der bisher beschriebenen Vorrichtung 120. Im Unterschied ist eine Mehrzahl 112 von Vorsprüngen 108 vorgesehen. Entsprechend ist eine Mehrzahl 119 von Einkerbungen 110 vorgesehen. Im dargestellten Ausführungsbeispiel weist der Bolzen 107 zwei Vorsprünge 108 auf. Entsprechend sind an der Gleitbahn 106 zwei Einkerbungen 110 ausgebildet. Gemäß weiteren Ausführungsbeispielen sind mehr als zwei Vorsprünge 108 ausgebildet. Die spielfreistellende Wirkung wird auf eine gewünschte Leichtgängigkeit der Bewegung beispielsweise abgestimmt durch die Anzahl der Vorsprünge 108 am Bolzen 107. Alternativ oder zusätzlich wird die spielfreistellende Wirkung auf eine gewünschte Leichtgängigkeit durch die Dimensionierung des Vorsprungs 108 oder der Vorsprünge 108 abgestimmt. Alternativ oder zusätzlich wird die spielfreistellende Wirkung auf die gewünschte Leichtgängigkeit abgestimmt durch die Form des Vorsprungs 108 oder der Vorsprünge 108.

Die Vorrichtung 120 ermöglicht insbesondere in der Blockierposition 114 einen Ausgleich der Toleranzen zwischen dem Bolzen 107 und dem Führungselement 105. Der Vorsprung 108 wirkt als toleranzausgleichendes Merkmal. Durch das Ausformen der Einkerbung 110 durch den Vorsprung 108 selbst ist die Vorrichtung 120 spielfrei. Die Spielfreistellung wirkt toleranzausgleichend. Das Anordnen der Vorsprünge 108 an dem Bolzen 107 ermöglicht eine einfache Herstellung der Vorrichtung 120.

Alternativ oder zusätzlich ist es auch möglich, einen Vorsprung an der Gleitbahn auszubilden. Der Vorsprung 108 an dem Bolzen 107 ist gemäß Ausführungsbeispielen jedoch einfacher herstellbar. Zudem wird die Gleitbahn 106 mittels des Vorsprungs 108 am Bolzen 107 nur punktuell deformiert beziehungsweise plastifiziert. Somit ist ein geringeres Verschleiß- und Setzungsrisiko realisierbar.

Alternativ oder zusätzlich zur beschriebenen beispielhaften Anwendung am Ausstellhebel 113 ist die Vorrichtung 120 generell anwendbar bei dem Bolzen 107, der entlang der Gleitbahn 106, beispielsweise einer Kulissenbahn geführt wird. Beispielsweise wird der Vorsprung 108 an einem Bolzen der relativ zu einer Kulissenbahn längs beweglich ist angewendet, beispielsweise bei einer Steuerstange und/oder einem Betätigungshebel einer Mechanik zum Bewegen eines Deckels relativ zu einem Fahrzeugdach.

Die Vorrichtung 120 ermöglicht eine Auslegung mit Überpressung an dem Vorsprung 108. Die lokale Überpressung nur an dem Vorsprung 108 hat einen geringen Einfluss auf die Schwergängigkeit beziehungsweise Leichtgängigkeit. Der Vorsprung 108 gräbt sich in den Kunststoff der Gleitbahn 106 und somit stellt sich eine möglichst optimale Passung bei der ersten Verwendung selbstständig ein. Somit ist eine einfache Toleranzauslegung zwischen dem Bolzen 107 und der Gleitbahn 106 möglich.

## Patentansprüche

1. Vorrichtung für ein Fahrzeugdach (101), aufweisend:
- ein Führungselement (105) mit einer Gleitbahn (106),
- einen Bolzen (107), der relativ zu dem Führungselement (105) verschiebbar ist und dabei auf der Gleitbahn (106) geführt ist, wobei
- der Bolzen (107) und das Führungselement (105) eine gemeinsame Kontaktfläche (109) aufweisen, die durch einen Vorsprung (108, 111) an dem Bolzen (107) und der Gleitbahn (106) ausgebildet ist, wobei der Vorsprung (108, 111) ausgebildet ist, beim Verschieben entlang der Gleitbahn (106) eine korrespondierenden Einkerbung (110) in die Gleitbahn (106) einzubringen.

2. Vorrichtung nach Anspruch 1, bei der der Vorsprung (108, 111) als ringförmig umlaufende Rippe (111) ausgebildet ist.

3. Vorrichtung nach Anspruch 1 oder 2, bei der eine Mehrzahl (112) von Vorsprüngen (108, 111) an dem Bolzen (107) ausgebildet ist.

4. Vorrichtung nach einem der Ansprüche 1 bis 3, bei der der Vorsprung (108, 111) aus einem härteren Material ausgebildet ist als die Gleitbahn (106).

5. Vorrichtung nach einem der Ansprüche 1 bis 4, bei der der Vorsprung (108, 111) aus einem Metall ist und die Gleitbahn (106) aus einem Kunststoff.

6. Vorrichtung nach einem der Ansprüche 1 bis 5, bei der der Bolzen (107) Teil eines Ausstellhebels (113) ist, und eine Bewegung des Ausstellhebels (113) entgegen einer ersten Richtung (X) relativ zu dem Führungselement (105) mittels des Bolzens (107) und der Gleitbahn (106) blockierbar ist.

7. Vorrichtung nach einem der Ansprüche 1 bis 6, bei der in einem Ausgangszustand der Vorsprung (108, 111) ein Übermaß zur Gleitbahn (106) aufweist.

8. Vorrichtung nach einem der Ansprüche 1 bis 7, bei der die Einkerbung (110) ausgebildet ist und die gemeinsame Kontaktfläche (109) durch den Vorsprung (108, 111) und der Einkerbung (110) an der Gleitbahn (106) ausgebildet ist.

9. Fahrzeugdach mit einer Dachöffnung (102), die mittels eines Deckels (103) verschließbar ist, wobei der Deckel (103) mittels einer Deckelmechanik (104) an dem Fahrzeugdach (101) befestigt ist, wobei die Deckelmechanik (104) eine Vorrichtung (120) nach einem der Ansprüche 1 bis 8 aufweist.

10. Verfahren zum Betreiben einer Vorrichtung (120) für ein Fahrzeugdach (101), umfassend:
- Bereitstellen eines Führungselement (105) mit einer Gleitbahn (106) und eines Bolzens (107) mit einem Vorsprung (108, 111),
- Verschieben des Bolzens (107) entlang der Gleitbahn (106), wobei der Vorsprung (108) in Kontakt mit der Gleitbahn (106) ist, und dadurch
- Ausbilden einer Einkerbung (110) in der Gleitbahn (106), die mit dem Vorsprung (108, 111) korrespondiert.

11. Verfahren nach Anspruch 10, umfassend:
- Verschieben eines Ausstellhebels (113) entlang einer ersten Richtung (X) relativ zu dem Führungselement (105) beim Verschieben des Bolzen (107), wobei der Bolzen (107) an dem der Ausstellhebel (113) befestigt ist und der Ausstellhebel (113) von dem Führungselement (105) gehalten ist,
- Bewegen des Bolzens (107) relativ zu der Gleitbahn (106) in eine Blockierposition (114), und dadurch
- Blockieren einer Bewegung des Ausstellhebels (113) entgegen der ersten Richtung (X) relativ zu dem Führungselement (105).

## Claims

1. Device for a vehicle roof (101), having:
- a guide element (105) with a slideway (106),
- a bolt (107) which can be displaced relative to the guide element (105) and is guided thereby on the slideway (106),
- the bolt (107) and the guide element (105) having a common contact area (109) which is formed by a protrusion (108, 111) on the bolt (107) and the slideway (106), the protrusion (108, 111) being configured to introduce a corresponding notch (110) into the slideway (106) during the displacement along the slideway (106).

2. Device according to Claim 1, wherein the protrusion (108, 111) is configured as an annularly circumferential rib (111).

3. Device according to Claim 1 or 2, wherein a multiplicity (112) of protrusions (108, 111) are formed on the bolt (107).

4. Device according to one of Claims 1 to 3, wherein the protrusion (108, 111) is formed of a harder material than the slideway (106).

5. Device according to one of Claims 1 to 4, wherein the protrusion (108, 111) is composed of a metal and the slideway (106) is composed of a plastic.

6. Device according to one of Claims 1 to 5, wherein the bolt (107) is part of a deployment lever (113), and a movement of the deployment lever (113) counter to a first direction (X) relative to the guide element (105) can be blocked by means of the bolt (107) and the slideway (106).

7. Device according to one of Claims 1 to 6, wherein, in an initial state, the protrusion (108, 111) has an oversize with respect to the slideway (106).

8. Device according to one of Claims 1 to 7, wherein the notch (110) is formed and the common contact area (109) is formed by the protrusion (108, 111) and the notch (110) on the slideway (106) .

9. Vehicle roof with a roof opening (102) which can be closed by means of a cover (103), the cover (103) being fastened to the vehicle roof (101) by means of a cover mechanism (104), the cover mechanism (104) having a device (120) according to one of Claims 1 to 8.

10. Method for operating a device (120) for a vehicle roof (101), comprising:
- provision of a guide element (105) with a slideway (106) and of a bolt (107) with a protrusion (108, 111),
- displacement of the bolt (107) along the slideway (106), the protrusion (108) being in contact with the slideway (106), and, as a result,
- formation of a notch (110) in the slideway (106), said notch corresponding to the protrusion (108, 111).

11. Method according to Claim 10, comprising:
- displacement of a deployment lever (113) along a first direction (X) relative to the guide element (105) during the displacement of the bolt (107), the bolt (107) being fastened to the deployment lever (113) and the deployment lever (113) being held by the guide element (105),
- movement of the bolt (107) relative to the slideway (106) into a blocking position (114), and, as a result,
- blocking of a movement of the deployment lever (113) counter to the first direction (X) relative to the guide element (105).

## Revendications

1. Dispositif pour un toit de véhicule (101), comprenant :
- un élément de guidage (105) muni d'une glissière (106),
- un boulon (107), qui peut coulisser par rapport à l'élément de guidage (105) et est pour cela guidé sur la glissière (106),
- le boulon (107) et l'élément de guidage (105) présentant une surface de contact commune (109), qui est formée par une protubérance (108, 111) sur le boulon (107) et la glissière (106), la protubérance (108, 111) étant configurée pour introduire, lors du coulissement le long de la glissière (106), une entaille correspondante (110) dans la glissière (106) .

2. Dispositif selon la revendication 1, dans lequel la protubérance (108, 111) est configurée sous la forme d'une nervure circonférentielle sous forme annulaire (111).

3. Dispositif selon la revendication 1 ou 2, dans lequel une pluralité (112) de protubérances (108, 111) est formée sur le boulon (107).

4. Dispositif selon l'une quelconque des revendications 1 à 3, dans lequel la protubérance (108, 111) est formée en un matériau plus dur que la glissière (106).

5. Dispositif selon l'une quelconque des revendications 1 à 4, dans lequel la protubérance (108, 111) est en un métal et la glissière (106) en une matière plastique.

6. Dispositif selon l'une quelconque des revendications 1 à 5, dans lequel le boulon (107) fait partie d'un levier de projection (113), et un déplacement du levier de projection (113) à l'encontre d'une première direction (X) par rapport à l'élément de guidage (105) peut être bloqué au moyen du boulon (107) et de la glissière (106).

7. Dispositif selon l'une quelconque des revendications 1 à 6, dans lequel, dans un état initial, la protubérance (108, 111) présente une surmesure par rapport à la glissière (106).

8. Dispositif selon l'une quelconque des revendications 1 à 7, dans lequel l'entaille (110) est formée et la surface de contact commune (109) est formée par la protubérance (108, 111) et l'entaille (110) sur la glissière (106).

9. Toit de véhicule muni d'une ouverture de toit (102), qui peut être fermée au moyen d'un couvercle (103), le couvercle (103) étant fixé au moyen d'un mécanisme de couvercle (104) sur le toit de véhicule (101), le mécanisme de couvercle (104) comprenant un dispositif (120) selon l'une quelconque des revendications 1 à 8.

10. Procédé d'exploitation d'un dispositif (120) pour un toit de véhicule (101), comprenant :
- la fourniture d'un élément de guidage (105) muni d'une glissière (106) et d'un boulon (107) muni d'une protubérance (108, 111),
- le coulissement du boulon (107) le long de la glissière (106), la protubérance (108) étant en contact avec la glissière (106), et ainsi
- la formation d'une entaille (110) dans la glissière (106), qui correspond à la protubérance (108, 111).

11. Procédé selon la revendication 10, comprenant :
- le coulissement d'un levier de projection (113) le long d'une première direction (X) par rapport à l'élément de guidage (105) lors du coulissement du boulon (107), le boulon (107) étant fixé au levier de projection (113) et le levier de projection (113) étant maintenu par l'élément de guidage (105),
- le déplacement du boulon (107) par rapport à la glissière (106) dans une position de blocage (114), et ainsi
- le blocage d'un déplacement du levier de projection (113) à l'encontre de la première direction (X) par rapport à l'élément de guidage (105).
